# EUROPEAN PATENT SPECIFICATION

(11) **EP 4 209 726 B1**
(45) Date of publication and mention of the grant of the patent: **11.11.2026**
(21) Application number: 21864404.5
(22) Date of filing: 02.09.2021
(51) Int. Cl.: C09K 5/04, F25B 13/00, F25B 41/40, F25B 49/02

(54) **USE OF REFRIGERANT IN REFRIGERATION CYCLE APPARATUS, AND REFRIGERATION CYCLE APPARATUS**
VERWENDUNG VON KÄLTEMITTEL IN EINER KÄLTEKREISLAUFVORRICHTUNG SOWIE KÄLTEKREISLAUFVORRICHTUNG
UTILISATION DE FLUIDE FRIGORIGÈNE DANS UN APPAREIL À CYCLE DE RÉFRIGÉRATION ET APPAREIL À CYCLE DE RÉFRIGÉRATION

(30) Priority: 04.09.2020 JP 2020148669
(43) Date of publication of application: 12.07.2023
(73) Proprietor: Daikin Industries, Ltd., Osaka-shi, Osaka 530-0001 (JP)
(72) Inventor: WATANABE, Yuka, Osaka-shi, Osaka 530-0001 (JP); GOTOU, Tomoyuki, Osaka-shi, Osaka 530-0001 (JP); ITOU, Yuuko, Osaka-shi, Osaka 530-0001 (JP); USUI, Takashi, Osaka-shi, Osaka 530-0001 (JP); YOSHIMURA, Takashi, Osaka-shi, Osaka 530-0001 (JP)
(74) Representative: Hoffmann Eitle
(86) International application number: PCT/JP2021/032299
(87) International publication number: WO 2022/050351

(56) References cited:
- WO-A1-2015/140827
- WO-A1-2020/017522
- CN-A- 103 542 565
- CN-U- 202 675 718
- GB-A- 2 530 915
- JP-A- 2013 139 990
- JP-A- 2018 059 638

## Description

### TECHNICAL FIELD

The present disclosure relates to the use of a refrigerant in a refrigeration cycle apparatus, and the refrigeration cycle apparatus.

### BACKGROUND ART

Conventionally, hydrofluoroolefins (HFO refrigerants) having lower global warming potential (hereinafter also simply referred to as GWP) than HFC refrigerants have attracted attention for refrigeration apparatuses. For example, 1,2-difluoroethylene (HFO-1132) is considered as a refrigerant with low GWP in JP 2019 196 312 A.

GB 2 530 915 A describes an air conditioner having a refrigerant circuit that circulates a refrigerant and is formed by connecting, by means of pipes, a compressor, a first heat exchanger, an expansion means, and a second heat exchanger. The refrigerant is an ethylene-type fluorohydrocarbon in which a flame-resistant refrigerant has been mixed.

WO 2015 140 827 A1 describes a heat pump device in which a refrigerant circulates between an indoor unit and an outdoor unit, wherein the refrigerant is a refrigerant mixture of HFO-1123 and an HFC series refrigerant that is not HFO-1123.

CN 103 542 565 A and CN 202 675 718 U each describe a room air-conditioner which comprises an outdoor unit, an indoor unit, connecting pipes so as to form a refrigerating fluid circulation circuit, and throttling elements arranged in the connecting pipes, wherein the indoor unit comprises an indoor heat exchanger, the outdoor unit comprises a compressor and an outdoor heat exchanger.

WO 2020 017 522 A1 describes a refrigeration cycle device, which implements a refrigeration cycle using a refrigerant with low GWP, and which is provided with: a refrigerant circuit comprising a compressor, a condenser, a decompression unit and an evaporator; and a prescribed refrigerant with low GWP sealed in the refrigerant circuit.

### SUMMARY OF THE INVENTION

### <Technical Problem>

Although such HFO refrigerants have low GWP, they are not stable. Thus, some of such HFO refrigerants are likely to undergo a self-decomposition reaction called a disproportionation reaction under given conditions. The disproportionation reaction is a chemical reaction in which two or more molecules of the same type mutually react, for example, to convert into substances of two or more different types. Such a disproportionation reaction of the HFO refrigerants is likely to occur in a compressor, in particular, in a refrigeration cycle apparatus. The disproportionation reaction that has occurred in the compressor may propagate to a portion outside the compressor in some cases.

An object of the present disclosure is to suppress the propagation of a disproportionation reaction of a refrigerant.

### <Solution to Problem>

The inventors of the present application have conducted concentrated studies to suppress the propagation of a disproportionation reaction of a refrigerant, and newly found that when a refrigerant pipe, which is connected to a compressor in which a disproportionation reaction of a refrigerant has occurred, satisfies a predetermined condition, the propagation of the disproportionation reaction can be suppressed. The inventors of the present application have conducted further research based on such findings to arrive at the present disclosure. The present disclosure provides the use of a refrigerant in a refrigeration cycle apparatus and the refrigeration cycle apparatus according to the following aspects. The present invention is defined by the appended set of claims.

The use of a composition as a refrigerant according to a first aspect is the use of a composition as a refrigerant in a refrigerant circuit. The refrigerant circuit includes a compressor, a four-way switching valve, and a refrigerant pipe. The refrigerant pipe connects the compressor and the four-way switching valve. The refrigerant pipe has a pipe diameter of 1/8 inch (3.18 mm) and a length greater than or equal to 5 cm, a pipe diameter of 1/4 inch (6.35 mm) and a length greater than or equal to 15 cm, or a pipe diameter of 3/8 inch (9.53 mm) and a length greater than or equal to 55 cm. The composition includes 1,2-difluoroethylene (HFO-1132) and/or 1,1,2-trifluoroethylene (HFO-1123).

According to such use of the composition as the refrigerant, it is possible to, even when a disproportionation reaction has occurred in the compressor, suppress the propagation of the disproportionation reaction to the four-way switching valve.

Note that 1,2-difluoroethylene may be trans-1,2-difluoroethylene [(E)-HFO-1132], cis-1,2-difluoroethylene [(Z)-HFO-1132], or a mixture of them.

A refrigeration cycle apparatus according to a second aspect includes a refrigerant circuit, and uses a composition as a refrigerant, the composition including 1,2-difluoroethylene (HFO-1132) and/or 1,1,2-trifluoroethylene (HFO-1123). The refrigerant circuit includes a compressor, a four-way switching valve, and a refrigerant pipe. The refrigerant pipe connects the compressor and the four-way switching valve. The refrigerant pipe has a pipe diameter of 1/8 inch (3.18 mm) and a length greater than or equal to 5 cm, a pipe diameter of 1/4 inch (6.35 mm) and a length greater than or equal to 15 cm, or a pipe diameter of 3/8 inch (9.53 mm) and a length greater than or equal to 55 cm.

Such a refrigeration cycle apparatus can, even when a disproportionation reaction has occurred in the compressor, suppress the propagation of the disproportionation reaction to the four-way switching valve.

### BRIEF DESCRIPTION OF THE DRAWINGS

Figure 1 is a schematic configuration diagram of a refrigeration cycle apparatus.
Figure 2 is a block configuration diagram of the refrigeration cycle apparatus.
Figure 3 is a schematic view illustrating a test device used in a test related to the propagation of a disproportionation reaction.
Figure 4 is a schematic configuration diagram of a refrigeration cycle apparatus according to another embodiment.

### DESCRIPTION OF EMBODIMENTS

Hereinafter, the use of a refrigerant in a refrigeration cycle apparatus and the refrigeration cycle apparatus according to the present disclosure will be specifically described with reference to examples. However, the following description is not intended to limit the present disclosure.

### (1) Refrigeration cycle apparatus 1

A refrigeration cycle apparatus 1 is an apparatus for performing vapor-compression refrigeration cycles to process a heat load of a target space. For example, the refrigeration cycle apparatus 1 is an air-conditioning apparatus for conditioning air in a target space.

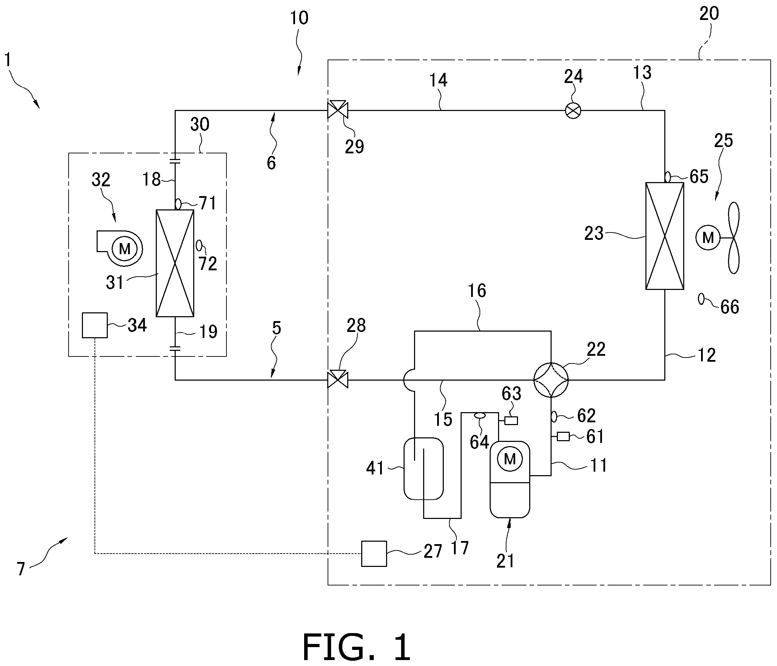

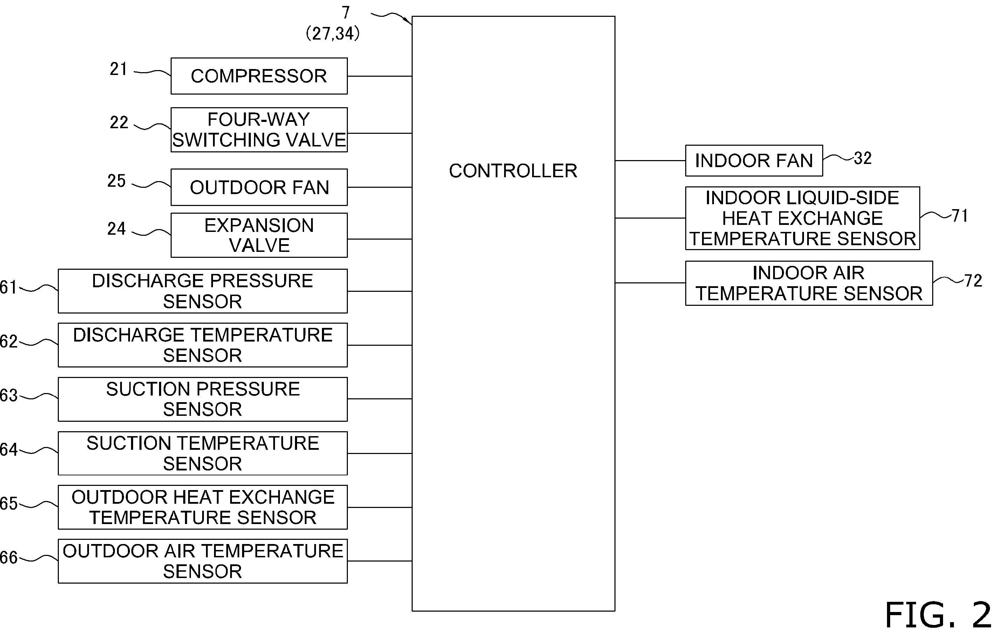

Figure 1 is a schematic configuration diagram of the refrigeration cycle apparatus. Figure 2 is a block configuration diagram of the refrigeration cycle apparatus.

The refrigeration cycle apparatus 1 mainly includes an outdoor unit 20; an indoor unit 30; a liquid-side refrigerant communication pipe 6 and a gas-side refrigerant communication pipe 5 each connecting the outdoor unit 20 and the indoor unit 30; a remote controller (not illustrated); and a controller 7 that controls the operation of the refrigeration cycle apparatus 1.

In the refrigeration cycle apparatus 1, refrigeration cycles are performed such that a refrigerant enclosed in a refrigerant circuit 10 is compressed, and is then cooled or condensed, and is then decompressed, and is then heated or evaporated, and is then compressed again. In the present embodiment, the refrigerant circuit 10 is filled with a refrigerant for performing vapor-compression refrigeration cycles.

### (2) Refrigerant

Examples of the refrigerant filling the refrigerant circuit 10 include one or more compounds selected from the group consisting of ethylene-based fluoroolefins, 2,3,3,3-tetrafluoropropene (HFO-1234yf), and 1,3,3,3-tetrafluoropropene (HFO-1234ze). Note that regarding the burning velocity defined by the ISO 817, 1,3,3,3-tetrafluoropropene (HFO-1234ze) with a burning velocity of 1.2 cm/s is more preferable than 2,3,3,3-tetrafluoropropene (HFO-1234yf) with a burning velocity of 1.5 cm/s. Regarding the LFL (Lower Flammability Limit) defined by the ISO 817, 1,3,3,3-tetrafluoropropene (HFO-1234ze) with a LFL of 65,000 vol.ppm or 6.5% is more preferable than 2,3,3,3-tetrafluoropropene (HFO-1234yf) with a LFL of 62,000 vol.ppm or 6.2%. In particular, the refrigerant may include one or more compounds selected from the group consisting of 1,2-difluoroethylene (HFO-1132), 1,1-difluoroethylene (HFO-1132a), 1,1,2-trifluoroethylene (HFO-1123), monofluoroethylene (HFO-1141), chlorotrifluoroethylene (CFO-1113), and perfluoroolefins. Above all, the refrigerant preferably includes 1,2-difluoroethylene (HFO-1132) and/or 1,1,2-trifluoroethylene (HFO-1123).

Herein, examples of ethylene-based fluoroolefins include 1,2-difluoroethylene (HFO-1132), 1,1-difluoroethylene (HFO-1132a), 1,1,2-trifluoroethylene (HFO-1123), monofluoroethylene (HFO-1141), chlorotrifluoroethylene (CFO-1113), and perfluoroolefins. Examples of perfluoroolefins include tetrafluoroethylene (FO-1114).

Note that the refrigerant circuit 10 is also filled with refrigerator oil together with the aforementioned refrigerant.

### (3) Outdoor unit 20

The outdoor unit 20 is connected to the indoor unit 30 via the liquid-side refrigerant communication pipe 6 and the gas-side refrigerant communication pipe 5, and consists part of the refrigerant circuit 10. The outdoor unit 20 mainly includes a compressor 21, a four-way switching valve 22, an outdoor heat exchanger 23, an expansion valve 24, an outdoor fan 25, a receiver 41, a gas-side shut-off valve 28, a liquid-side shut-off valve 29, and a first refrigerant pipe 11 to a seventh refrigerant pipe 17.

The compressor 21 is a device that compresses a low-pressure refrigerant in a refrigeration cycle up to a high pressure. Herein, the compressor 21 may be a hermetic compressor in which a rotary-type or scroll-type positive-displacement compression element is rotationally driven by a compressor motor. In the present embodiment, a rotary compressor is used. The compressor motor is used to change the volume, and its operating frequency can be controlled with an inverter. The seventh refrigerant pipe 17, which is a suction pipe, is connected to the suction side of the compressor 21. The first refrigerant pipe 11, which is a discharge pipe, is connected to the discharge side of the compressor 21.

The four-way switching valve 22 is a valve that switches a flow channel as the movement of its valve element (not illustrated) is controlled, and is a valve that switches the refrigerant circuit 10 between a cooling connection state and a heating connection state. Specifically, in the cooling connection state, the four-way switching valve 22 is switched to a state of connecting the first refrigerant pipe 11 connected to the discharge side of the compressor 21 and the second refrigerant pipe 12 connected to the outdoor heat exchanger 23, and connecting the seventh refrigerant pipe 17 connected to the suction side of the compressor 21, the receiver 41, the sixth refrigerant pipe 16, and the fifth refrigerant pipe 15 connected to the gas-side shut-off valve 28. Meanwhile, in the heating connection state, the four-way switching valve 22 is switched to a state of connecting the first refrigerant pipe 11 connected to the discharge side of the compressor 21 and the fifth refrigerant pipe 15 connected to the gas-side shut-off valve 28, and connecting the seventh refrigerant pipe 17 connected to the suction side of the compressor 21, the receiver 41, the sixth refrigerant pipe 16, and the second refrigerant pipe 12 connected to the outdoor heat exchanger 23.

The outdoor heat exchanger 23 is a heat exchanger that functions as a heat radiator or condenser for a high-pressure refrigerant in a refrigeration cycle during the cooling operation, and functions as an evaporator for a low-pressure refrigerant in a refrigeration cycle during the heating operation. The gas-side end portion of the outdoor heat exchanger 23 is connected to the four-way switching valve 22 via the second refrigerant pipe 12. The liquid-side end portion of the outdoor heat exchanger 23 is connected to the expansion valve 24 via the third refrigerant pipe 13.

The expansion valve 24 is provided between the liquid-side outlet of the outdoor heat exchanger 23 and the liquid-side shut-off valve 29 in the refrigerant circuit 10. The expansion valve 24 is a motor-operated expansion valve with an opening degree that is adjustable as the movement of its valve element (not illustrated) relative to a valve seat (not illustrated) is controlled. The expansion valve 24 and the liquid-side shut-off valve 29 are connected via the fourth refrigerant pipe 14.

The outdoor fan 25 produces an air flow for causing outdoor air to be sucked into the outdoor unit 20, and causing the sucked air to exchange heat with a refrigerant in the outdoor heat exchanger 23, and then causing the air to be discharged to the outside. The outdoor fan 25 is rotationally driven by an outdoor fan motor.

The receiver 41 is a refrigerant container that is provided between the suction side of the compressor 21 and one of connection ports of the four-way switching valve 22, and that can store an excess refrigerant in the refrigerant circuit 10 as a liquid refrigerant. The inlet side of the receiver 41 is connected to the four-way switching valve 22 via the sixth refrigerant pipe 16. The outlet side of the receiver 41 is connected to the suction side of the compressor 21 via the seventh refrigerant pipe 17.

The liquid-side shut-off valve 29 is a manual valve disposed at a portion of the outdoor unit 20 connected to the liquid-side refrigerant communication pipe 6.

The gas-side shut-off valve 28 is a manual valve disposed at a portion of the outdoor unit 20 connected to the gas-side refrigerant communication pipe 5.

The outdoor unit 20 includes an outdoor unit controller 27 that controls the operation of each portion consisting the outdoor unit 20. The outdoor unit controller 27 has a microcomputer including a CPU and a memory, for example. The outdoor unit controller 27 is connected to an indoor unit controller 34 of each indoor unit 30 via a communication line, and transmits and receives control signals, for example.

The outdoor unit 20 is provided with a discharge pressure sensor 61, a discharge temperature sensor 62, a suction pressure sensor 63, a suction temperature sensor 64, an outdoor heat exchange temperature sensor 65, and an outdoor air temperature sensor 66, for example. Each of such sensors is electrically connected to the outdoor unit controller 27, and transmits a detection signal to the outdoor unit controller 27. The discharge pressure sensor 61 detects the pressure of a refrigerant flowing through the first refrigerant pipe 11 that is the discharge pipe connecting the discharge side of the compressor 21 and one of the connection ports of the four-way switching valve 22. The discharge temperature sensor 62 detects the temperature of the refrigerant flowing through the first refrigerant pipe 11 that is the discharge pipe. The suction pressure sensor 63 detects the pressure of a refrigerant flowing through the seventh refrigerant pipe 17 that is the suction pipe connecting the suction side of the compressor 21 and the receiver 41. The suction temperature sensor 64 detects the temperature of the refrigerant flowing through the seventh refrigerant pipe 17 that is the suction pipe. The outdoor heat exchange temperature sensor 65 detects the temperature of a refrigerant flowing through the liquid-side outlet of the outdoor heat exchanger 23 on the side opposite to the side connecting to the four-way switching valve 22. The outdoor air temperature sensor 66 detects the temperature of outdoor air before it passes through the outdoor heat exchanger 23.

### (4) Indoor unit 30

The indoor unit 30 is disposed on an indoor wall surface or ceiling as a target space, for example. The indoor unit 30 is connected to the outdoor unit 20 via the liquid-side refrigerant communication pipe 6 and the gas-side refrigerant communication pipe 5, and consists part of the refrigerant circuit 10.

The indoor unit 30 includes an indoor heat exchanger 31, an eighth refrigerant pipe 18, a ninth refrigerant pipe 19, and an indoor fan 32.

The indoor heat exchanger 31 is connected at its liquid-side end to the liquid-side refrigerant communication pipe 6 via the eighth refrigerant pipe 18, and is connected at its gas-side end to the gas-side refrigerant communication pipe 5 via the ninth refrigerant pipe 19. The indoor heat exchanger 31 is a heat exchanger that functions as an evaporator for a low-pressure refrigerant in a refrigeration cycle during the cooling operation, and functions as a condenser for a high-pressure refrigerant in a refrigeration cycle during the heating operation.

The indoor fan 32 produces an air flow for causing indoor air to be sucked into the indoor unit 30, and causing the sucked air to exchange heat with a refrigerant in the indoor heat exchanger 31, and then causing the air to be discharged to the outside. The indoor fan 32 is rotationally driven by an indoor fan motor.

The indoor unit 30 includes the indoor unit controller 34 that controls the operation of each unit consisting the indoor unit 30. The indoor unit controller 34 has a microcomputer including a CPU and a memory, for example. The indoor unit controller 34 is connected to the outdoor unit controller 27 via the communication line, and transmits and receives control signals, for example.

The indoor unit 30 is provided with an indoor liquid-side heat exchange temperature sensor 71 and an indoor air temperature sensor 72, for example. Each of such sensors is electrically connected to the indoor unit controller 34, and transmits a detection signal to the indoor unit controller 34. The indoor liquid-side heat exchange temperature sensor 71 detects the temperature of a refrigerant flowing through the liquid-refrigerant-side outlet of the indoor heat exchanger 31. The indoor air temperature sensor 72 detects the temperature of indoor air before it passes through the indoor heat exchanger 31.

### (5) Controller 7

In the refrigeration cycle apparatus 1, the outdoor unit controller 27 and the indoor unit controller 34 are connected via the communication line, thus consisting the controller 7 that controls the operation of the refrigeration cycle apparatus 1.

The controller 7 mainly includes a CPU (central processing unit) and a memory, such as ROM and RAM. Note that various processes and control performed by the controller 7 are implemented as the portions, which are included in the outdoor unit controller 27 and/or the indoor unit controller 34, function in an integrated manner.

### (6) Operation modes

The refrigeration cycle apparatus 1 can execute at least a cooling operation mode and a heating operation mode.

The controller 7 determines whether the instruction indicates the cooling operation mode or the heating operation mode, based on an instruction received from the remote controller or the like, and executes the mode.

In the cooling operation mode, the operating frequency of the compressor 21 is controlled to control the volume so that the evaporating temperature of the refrigerant in the refrigerant circuit 10 reaches a target evaporating temperature, for example.

The gaseous refrigerant discharged from the compressor 21 passes through the first refrigerant pipe 11, the four-way switching valve 22, and the second refrigerant pipe 12, and is then condensed in the outdoor heat exchanger 23. The refrigerant that has flowed through the outdoor heat exchanger 23 flows through the third refrigerant pipe 13, and is then decompressed while passing through the expansion valve 24.

The refrigerant decompressed in the expansion valve 24 flows through the liquid-side refrigerant communication pipe 6 via the fourth refrigerant pipe 14 and the liquid-side shut-off valve 29, and is then sent to the indoor unit 30. After that, the refrigerant flows through the eighth refrigerant pipe 18, and then evaporates in the indoor heat exchanger 31, and further flows into the gas-side refrigerant communication pipe 5 via the ninth refrigerant pipe 19. The refrigerant that has flowed through the gas-side refrigerant communication pipe 5 is sucked into the compressor 21 again via the gas-side shut-off valve 28, the fifth refrigerant pipe 15, the four-way switching valve 22, the sixth refrigerant pipe 16, the receiver 41, and the seventh refrigerant pipe 17.

In the heating operation mode, the operating frequency of the compressor 21 is controlled to control the volume so that the condensation temperature of the refrigerant in the refrigerant circuit 10 reaches a target condensation temperature, for example.

The gaseous refrigerant discharged from the compressor 21 flows through the first refrigerant pipe 11, the four-way switching valve 22, the fifth refrigerant pipe 15, and the gas-side refrigerant communication pipe 5, and is then sent to the indoor unit 30. After that, the refrigerant flows into the gas-side end of the indoor heat exchanger 31 via the ninth refrigerant pipe 19 so that the refrigerant is condensed or is allowed to radiate heat in the indoor heat exchanger 31. The refrigerant, which has been condensed or has been allowed to radiate heat in the indoor heat exchanger 31, passes through the eighth refrigerant pipe 18, and flows through the liquid-side refrigerant communication pipe 6, and then flows into the outdoor unit 20.

The refrigerant that has passed through the liquid-side shut-off valve 29 of the outdoor unit 20 passes through the fourth refrigerant pipe 14, and is then decompressed in the expansion valve 24. The refrigerant decompressed in the expansion valve 24 passes through the third refrigerant pipe 13, and then evaporates in the outdoor heat exchanger 23. The refrigerant that has passed through the outdoor heat exchanger 23 is sucked into the compressor 21 again via the second refrigerant pipe 12, the four-way switching valve 22, the sixth refrigerant pipe 16, the receiver 41, and the seventh refrigerant pipe 17.

### (7) First refrigerant pipe

In the present embodiment, a refrigerant pipe with a pipe diameter less than or equal to 3/8 inch and a length greater than or equal to 5 cm is used as the first refrigerant pipe 11 that is the refrigerant pipe connecting the compressor 21 and the four-way switching valve 22. Examples of such a refrigerant pipe include a pipe with a pipe diameter of 1/8 inch (3.18 mm) and a length greater than or equal to 5 cm, a pipe diameter of 1/4 inch (6.35 mm) and a length greater than or equal to 15 cm, or a pipe diameter of 3/8 inch (9.53 mm) and a length greater than or equal to 55 cm.

### (8) Features of embodiment

In the refrigeration cycle apparatus 1 of the present embodiment, a refrigerant that may undergo a disproportionation reaction when a predetermined condition is satisfied is used. In particular, in the refrigerant circuit 10, a disproportionation reaction is highly likely to occur in the compressor 21 where a refrigerant is likely to be in a high-temperature, high-pressure state and electric energy may be generated around an electrical contact or frictional heat may be generated around a sliding portion. Such a disproportionation reaction that has occurred in the compressor 21 may propagate to elements other than the compressor 21 in the refrigerant circuit 10.

In contrast, the inventors of the present application have confirmed that the propagation of a disproportionation reaction can be suppressed in the first refrigerant pipe 11 connected to the compressor 21 when a predetermined condition is satisfied based on the test results described below.

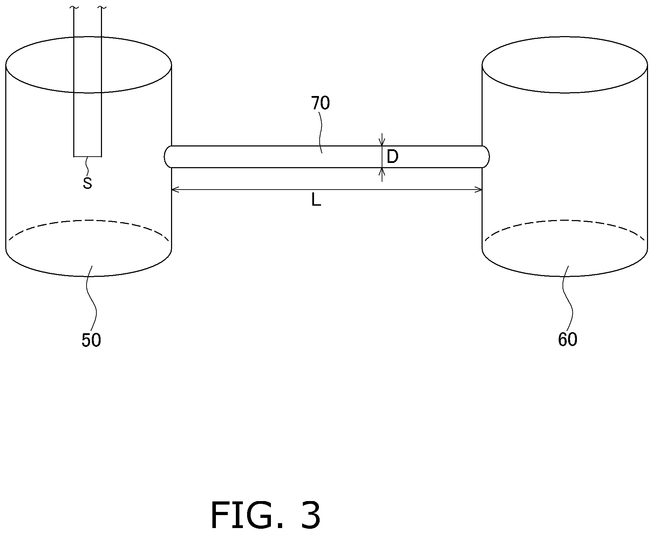

Specifically, as illustrated in Figure 3, a test was performed using a test device including a first pressure-resistant container 50 and a second pressure-resistant container 60 connected with a refrigerant pipe 70. Each of the first pressure-resistant container 50 and the second pressure-resistant container 60 was a container made of SUS and having a cylindrical internal space. In the test, each of the first pressure-resistant container 50 and the second pressure-resistant container 60 was provided with a thermocouple for detecting the temperature of a refrigerant in the container, and a pressure sensor for detecting the pressure of the refrigerant in the container. The refrigerant pipe 70 was a cylindrical pipe made of SUS, having a length L and a pipe diameter (i.e., outside diameter) D, and extending from the peripheral face of the first pressure-resistant container 50 to the peripheral face of the second pressure-resistant container 60. An ignition source S, which was a platinum wire provided to connect two electrodes, was provided in the center of the internal space of the pressure-resistant container 50. The test was performed by filling the first pressure-resistant container 50, the second pressure-resistant container 60, and the refrigerant pipe 70 with 1,2-difluoroethylene (HFO-1132(E)) as a refrigerant, and setting the refrigerant temperature to 150°C while setting the refrigerant pressure to 1.2 MPa. In the test, the length L and the pipe diameter D of the refrigerant pipe 70 were changed, and a disproportionation reaction was caused to occur with the ignition source S in the first pressure-resistant container 50 so that differences in the propagation of the disproportionation reaction through the refrigerant pipe 70 were observed. The test results are indicated below.

In the following table, the field "Propagation of Disproportionation" indicates the presence or absence of the propagation of a disproportionation reaction through the refrigerant pipe 70. Specifically, each example was determined as "Propagation Present" if the decomposition rate of 1,2-difluoroethylene (HFO-1132(E)) (i.e., the decomposition rate in the entirety of the first pressure-resistant container 50, the second pressure-resistant container 60, and the refrigerant pipe 70) measured using gas chromatography was greater than or equal to 90%. Meanwhile, each example was determined as "Propagation Absent" if the decomposition rate of 1,2-difluoroethylene (HFO-1132(E)) (i.e., the decomposition rate in the entirety of the first pressure-resistant container 50, the second pressure-resistant container 60, and the refrigerant pipe 70) was 40 to 60%.

**[Table 1]**

| | Pipe Diameter (inch) of Refrigerant Pipe | Inside Diameter (cm) of Refrigerant Pipe | Length (cm) of Refrigerant Pipe | Propagation of Disproportionation |
|---|---|---|---|---|
| Test Example 1 | 1/8 | 0.246 | 5 | Propagation Absent |
| Test Example 2 | 1/4 | 0.457 | 10 | Propagation Present |
| Test Example 3 | | | 20 | Propagation Absent |
| Test Example 4 | 3/8 | 0.775 | 50 | Propagation Present |
| Test Example 5 | | | 60 | Propagation Absent |

The foregoing test results demonstrate that the smaller the pipe diameter of the refrigerant pipe 70, the more likely the propagation of a disproportionation reaction is to be suppressed. In addition, the foregoing test results also demonstrate that the longer the refrigerant pipe 70, the more likely the propagation of a disproportionation reaction is to be suppressed.

In the refrigeration cycle apparatus 1 of the present embodiment, a refrigerant pipe with a pipe diameter less than or equal to 3/8 inch (9.53 mm) and a length greater than or equal to 5 cm is used as the first refrigerant pipe 11 connected to the discharge side of the compressor 21. Therefore, even when a disproportionation reaction of a refrigerant has occurred in the compressor 21, the propagation of the disproportionation reaction can be suppressed in the first refrigerant pipe 11. Accordingly, it is possible to suppress the propagation of the disproportionation reaction of the refrigerant to the four-way switching valve 22 connected to the first refrigerant pipe 11, and to each element and each refrigerant pipe connected beyond the four-way switching valve 22 in the refrigerant circuit 10.

### (9) Other embodiments

### (9-1) Another embodiment A

The foregoing embodiment has exemplarily illustrated a case where the refrigeration cycle apparatus 1 includes the refrigerant circuit 10 that can switch operation between the cooling operation and the heating operation.

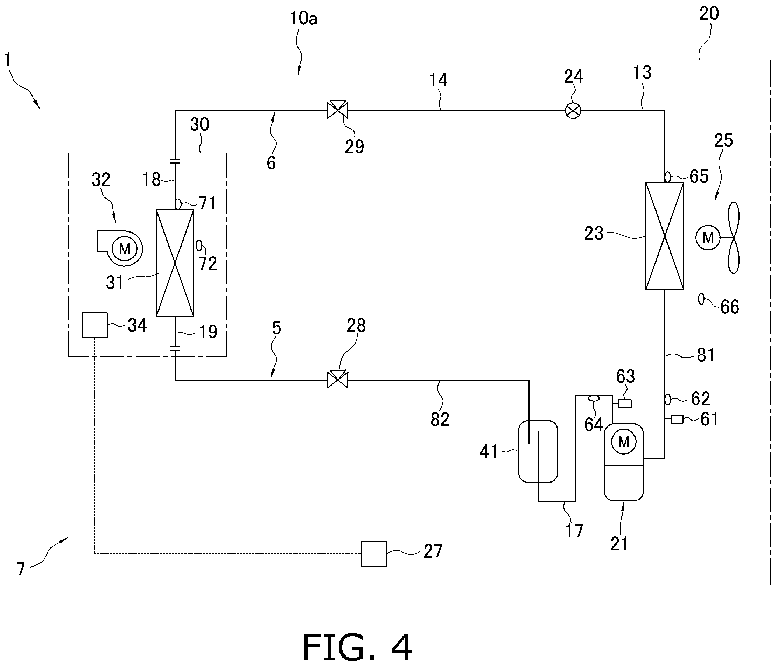

In contrast, the refrigeration cycle apparatus 1 may be the one including a refrigerant circuit 10a specially designed for the cooling operation as illustrated in Figure 4, for example. The refrigerant circuit 10a includes a tenth refrigerant pipe 81 and an eleventh refrigerant pipe 82 instead of the first refrigerant pipe 11, the four-way switching valve 22, the second refrigerant pipe 12, the sixth refrigerant pipe 16, and the fifth refrigerant pipe 15 of the foregoing embodiment. The tenth refrigerant pipe 81 connects the discharge side of the compressor 21 and the gaseous-refrigerant side of the outdoor heat exchanger 23. The eleventh refrigerant pipe 82 connects the gas-side shut-off valve 28 and the receiver 41.

In such a configuration, as a refrigerant pipe with a pipe diameter less than or equal to 3/8 inch (9.53 mm) and a length greater than or equal to 5 cm is used as the tenth refrigerant pipe 81 connected to the discharge side of the compressor 21, it is possible to obtain advantageous effects similar to those of the foregoing embodiment even in the refrigeration cycle apparatus 1 including the refrigerant circuit 10a specially designed for the cooling operation. Specifically, even when a disproportionation reaction of a refrigerant has occurred in the compressor 21, it is possible to suppress the propagation of the disproportionation reaction to the outdoor heat exchanger 23.

### (9-2) Another embodiment B

The foregoing embodiment has exemplarily illustrated a case where the first refrigerant pipe 11 extending from the compressor 21 is a single pipe.

In contrast, the refrigerant pipe extending from the compressor 21 may include a plurality of branched pipes. Accordingly, even when the sum of the cross-sectional areas of the branched pipes for passing a refrigerant is the same as the cross-sectional area of a single refrigerant pipe for passing a refrigerant, the pipe diameters of the branched pipes can be reduced. Thus, the propagation of a disproportionation reaction can be suppressed easily. Further, the propagation of a disproportionation reaction can also be suppressed easily when the total length of the plurality of branched pipes can be made longer than the length of a single refrigerant pipe.

### REFERENCE SIGNS LIST

1 Refrigeration cycle apparatus
10 Refrigerant circuit
10a Refrigerant circuit
11 First refrigerant pipe (refrigerant pipe)
21 Compressor
22 Four-way switching valve (first component)
23 Outdoor heat exchanger (first component)
81 Tenth refrigerant pipe (refrigerant pipe)

## Claims

1. Use of a composition as a refrigerant in a refrigerant circuit (10, 10a),
wherein:
the composition comprises 1,2-difluoroethylene (HFO-1132) and/or 1,1,2-trifluoroethylene (HFO-1123), and
the refrigerant circuit (10, 10a) includes a compressor (21), a four-way switching valve (22), and a refrigerant pipe (11) connecting the compressor and the four-way switching valve (22),
**characterized in that**
the refrigerant pipe (11) has a pipe diameter of 1/8 inch (3.18 mm) and a length greater than or equal to 5 cm, a pipe diameter of 1/4 inch (6.35 mm) and a length greater than or equal to 15 cm, or a pipe diameter of 3/8 inch (9.53 mm) and a length greater than or equal to 55 cm.

2. A refrigeration cycle apparatus (1) using a composition as a refrigerant, the composition comprising 1,2-difluoroethylene (HFO-1132) and/or 1,1,2-trifluoroethylene (HFO-1123),
the refrigeration cycle apparatus (1) comprising a refrigerant circuit (10, 10a) including a compressor (21), a four-way switching valve (22), and a refrigerant pipe (11) connecting the compressor and the four-way switching valve (22),
**characterized in that**
the refrigerant pipe (11) has a pipe diameter of 1/8 inch (3.18 mm) and a length greater than or equal to 5 cm, a pipe diameter of 1/4 inch (6.35 mm) and a length greater than or equal to 15 cm, or a pipe diameter of 3/8 inch (9.53 mm) and a length greater than or equal to 55 cm.

## Patentansprüche

1. Verwendung einer Zusammensetzung als Kältemittel in einem Kältemittelkreislauf (10, 10a),
wobei:
die Zusammensetzung 1,2-Difluorethylen (HFO-1132) und/oder 1,1,2-Trifluorethylen (HFO-1123) umfasst, und
der Kältemittelkreislauf (10, 10a) einen Kompressor (21), ein Vierwege-Umschaltventil (22) und eine Kältemittelleitung (11), die den Kompressor und das Vierwege-Umschaltventil (22) verbindet, einschließt,
**dadurch gekennzeichnet, dass**
die Kältemittelleitung (11) einen Rohrdurchmesser von 1/8 Zoll (3,18 mm) und eine Länge größer oder gleich 5 cm, einen Rohrdurchmesser von 1/4 Zoll (6,35 mm) und eine Länge größer oder gleich 15 cm oder einen Rohrdurchmesser von 3/8 Zoll (9,53 mm) und eine Länge größer oder gleich 55 cm aufweist.

2. Kältekreislaufvorrichtung (1) unter Verwendung einer Zusammensetzung als Kältemittel, wobei die Zusammensetzung 1,2-Difluorethylen (HFO-1132) und/oder 1,1,2-Trifluorethylen (HFO-1123) umfasst,
wobei die Kältekreislaufvorrichtung (1) einen Kältemittelkreislauf (10, 10a) umfasst, der einen Kompressor (21), ein Vierwege-Umschaltventil (22) und eine Kältemittelleitung (11) einschließt, die den Kompressor und das Vierwege-Umschaltventil (22) verbindet,
**dadurch gekennzeichnet, dass**
die Kältemittelleitung (11) einen Rohrdurchmesser von 1/8 Zoll (3,18 mm) und eine Länge größer oder gleich 5 cm, einen Rohrdurchmesser von 1/4 Zoll (6,35 mm) und eine Länge größer oder gleich 15 cm oder einen Rohrdurchmesser von 3/8 Zoll (9,53 mm) und eine Länge größer oder gleich 55 cm aufweist.

## Revendications

1. Utilisation d'une composition en tant que fluide frigorigène dans un circuit de fluide frigorigène (10, 10a),
dans laquelle :
la composition comprend du 1,2-difluoroéthylène (HFO-1132) et/ou du 1,1,2-trifluoroéthylène (HFO-1123), et
le circuit de fluide frigorigène (10, 10a) inclut un compresseur (21), une vanne (22) de commutation à quatre voies, et un tuyau de fluide frigorigène (11) reliant le compresseur et la vanne (22) de commutation à quatre voies,
**caractérisée en ce que**
le tuyau de fluide frigorigène (11) présente un diamètre de tuyau de 1/8 pouce (3,18 mm) et une longueur supérieure ou égale à 5 cm, un diamètre de tuyau de 1/4 pouce (6,35 mm) et une longueur supérieure ou égale à 15 cm, ou un diamètre de tuyau de 3/8 pouce (9,53 mm) et une longueur supérieure ou égale à 55 cm.

2. Appareil (1) à cycle de réfrigération utilisant une composition en tant que fluide frigorigène, la composition comprenant du 1,2-difluoroéthylène (HFO-1132) et/ou du 1,1,2-trifluoroéthylène (HFO-1123),
l'appareil (1) à cycle de réfrigération comprenant un circuit de fluide frigorigène (10, 10a) incluant un compresseur (21), une vanne (22) de commutation à quatre voies, et un tuyau de fluide frigorigène (11) reliant le compresseur et la vanne (22) de commutation à quatre voies,
**caractérisé en ce que**
le tuyau de fluide frigorigène (11) présente un diamètre de tuyau de 1/8 pouce (3,18 mm) et une longueur supérieure ou égale à 5 cm, un diamètre de tuyau de 1/4 pouce (6,35 mm) et une longueur supérieure ou égale à 15 cm, ou un diamètre de tuyau de 3/8 pouce (9,53 mm) et une longueur supérieure ou égale à 55 cm.
